(19) Europäisches Patentamt
European Patent Office
Office européen des brevets

(11) **EP 4 773 654 A1**

(12) **EUROPEAN PATENT APPLICATION**
published in accordance with Art. 153(4) EPC

(43) Date of publication:
**08.07.2026 Bulletin 2026/28**

(21) Application number: **24864390.0**

(22) Date of filing: **19.08.2024**

(51) International Patent Classification (IPC):
***H04W 24/02*** (2009.01)

(52) Cooperative Patent Classification (CPC):
**H04W 24/02**

(86) International application number:
**PCT/CN2024/112990**

(87) International publication number:
**WO 2025/055667 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 CN 202311171203**

(71) Applicant: **ZTE CORPORATION
Shenzhen, Guangdong 518057 (CN)**

(72) Inventors:
• **MA, Cong
Shenzhen, Guangdong 518057 (CN)**
• **FENG, Shuai
Shenzhen, Guangdong 518057 (CN)**
• **HUANG, Jun
Shenzhen, Guangdong 518057 (CN)**
• **CHEN, Shijun
Shenzhen, Guangdong 518057 (CN)**
• **LI, Yongbiao
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SENSING SIGNAL CONFIGURATION METHOD AND SYSTEM**

(57) The present application discloses a sensing signal configuration method and system. The method comprises: on the basis of parameters of a base station, calculating a target distance that can be sensed using a target sensing signal, wherein the target sensing signal comprises a continuous wave sensing signal or a pulse sensing signal; determining a target sensing distance range on the basis of a target sensing scenario; and on the basis of the magnitude relationship between the target distance and a boundary value of the target sensing distance range, determining a target sensing signal configured for the base station.

```
                                                              102
┌──────────────────────────────────────────────────────────────┐
│ Calculate a target distance that can be sensed using a target  │
│ sensing signal on the basis of parameters of a base station    │
└──────────────────────────────────────────────────────────────┘
                              │
                              ▼                               104
┌──────────────────────────────────────────────────────────────┐
│ Determine a target sensing distance range on the basis of a    │
│ target sensing scenario                                        │
└──────────────────────────────────────────────────────────────┘
                              │
                              ▼                               106
┌──────────────────────────────────────────────────────────────┐
│ Determine a target sensing signal configured for the base      │
│ station on the basis of the magnitude relationship between     │
│ the target distance and a boundary value of the target         │
│ sensing distance range                                         │
└──────────────────────────────────────────────────────────────┘
```

FIG. 1

EP 4 773 654 A1

# Description

## CROSS-REFERENCE TO RELATED APPLICATIONS

The present application is proposed based on and claims priority to Chinese Application No. 202311171203.2, filed with the Chinese Patent Office on September 12, 2023, with the title "SENSING SIGNAL CONFIGURATION METHOD AND SYSTEM", the disclosure of which is hereby incorporated by reference in its entirety.

## TECHNICAL FIELD

The present application relates to the field of integrated sensing and communication technology, particularly relates to a sensing signal configuration method and system.

## BACKGROUND

Integrated sensing and communication refers to fusion of communication and sensing, allowing the integrated sensing and communication system to possess both communication and sensing capabilities simultaneously. However, in the process of fusion of communication and sensing, due to differences in their implementation mechanisms and application scenarios, there are often situations where the coverage of communication is different from that of sensing. During the communication process, signals are exchanged between the base station and the terminal, so communication signals only experience transmission loss in a unidirectional link when transmitted between the base station and the terminal.

The sensing process is achieved by receiving the echo signal of an object after the base station transmits a signal. In this process, the signal not only experiences transmission loss in a bidirectional link, but also experiences significant energy loss when reflected on the target surface. As a result, the sensing coverage range of the sensing signal will be narrowed, and there will be a sensing coverage range that cannot be covered. Therefore, the range that sensing signal need to cover is complex and varied, but the integrated sensing and communication system in related technologies cannot flexibly meet the requirements of different sensing coverage ranges.

## SUMMARY

The embodiments of the present application provide a sensing signal configuration method and system.

In the first aspect, provided is a sensing signal configuration method including: on the basis of parameters of a base station, calculating a target distance that can be sensed using a target sensing signal, wherein the target sensing signal comprises a continuous wave sensing signal or a pulse sensing signal; determining a target sensing distance range on the basis of a sensing scenario; and on the basis of the magnitude relationship between the target distance and a boundary value of the target sensing distance range, determining a target sensing signal configured for the base station.

In the second aspect, provided is a sensing signal configuration system including: a sensing signal configuration module, a sensing signal generation module and a transmission module; wherein the sensing signal configuration module is used to calculate a target distance that can be sensed using a target sensing signal on the basis of parameters of a base station, wherein the target sensing signal comprises a continuous wave sensing signal or a pulse sensing signal; determine a target sensing distance range on the basis of a sensing scenario; and determine a target sensing signal configured for the base station on the basis of the magnitude relationship between the target distance and a boundary value of the target sensing distance range; the sensing signal generation module is used to generate the corresponding target sensing signal based on the target sensing signal configured by the sensing signal configuration module for the base station; and the transmission module is used to send the target sensing signal generated by the sensing signal generation module.

In the third aspect, provided is an electronic device comprising a processor and a memory, the memory storing programs or instructions executable on the processor, which when executed by the processor, implements the steps of the sensing signal configuration method as described in the first aspect.

In the fourth aspect, provided is a computer-readable storage medium storing at least one computer program, which when loaded and executed by a processor, implements the steps of the sensing signal configuration method as described in the first aspect.

## BRIEF DESCRIPTION OF DRAWINGS

The accompanying drawings are incorporated into the specification and form a part of the specification, illustrating embodiments in accordance with the present application and used together with the specification to explain the principles of the present application.

Fig. 1 shows a flowchart of a sensing signal configuration method provided by an exemplary embodiment of the present application.

Fig. 2 shows a flowchart of another sensing signal configuration method provided by an exemplary embodiment of the present application.

Fig. 3a shows a schematic diagram of the configuration of sensing signals in different scenarios provided by an exemplary embodiment of the present application.

Fig. 3b shows a schematic diagram of the configuration of sensing signals in different scenarios provided by an exemplary embodiment of the present application.

Fig. 3c shows a schematic diagram of the configuration of sensing signals in different scenarios provided by an exemplary embodiment of the present application.

Fig. 3d shows a schematic diagram of the configuration of sensing signals in different scenarios provided by an exemplary embodiment of the present application.

Fig. 4 shows a schematic diagram of the structure of a sensing signal configuration system provided by an exemplary embodiment of the present application.

Fig. 5 shows a schematic diagram of the structure of an electronic device provided by an exemplary embodiment of the present application.

## DETAILED DESCRIPTION

Here, exemplary embodiments will be described in detail, with examples shown in the accompanying drawings. When referring to the accompanying drawings, unless otherwise indicated, the same numbers in different drawings represent the same or similar elements. The implementation described in the following exemplary embodiments do not represent all implementations consistent with the present application. On the contrary, they are only examples of devices and methods consistent with some aspects of the present application as described in the accompanying claims.

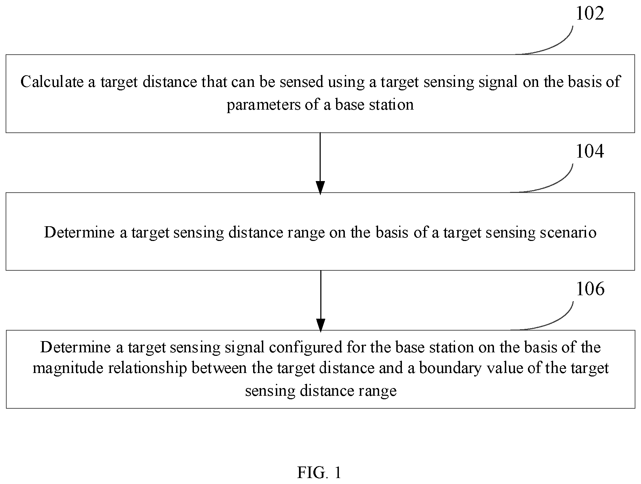

Fig. 1 shows a flowchart of a sensing signal configuration method provided by an exemplary embodiment of the present application. Referring to Fig.1, the method includes the following steps.

At Step 102: on the basis of parameters of a base station, a target distance that can be sensed using a target sensing signal is calculated.

The target sensing signal includes a continuous wave sensing signal or a pulse sensing signal; and the target distance may include a first distance that can be sensed using the continuous wave sensing signal and a second distance that can be sensed using the pulse sensing signal.

The base station can be a single-station communication-sensing integrated base station, and the parameters of the base station include the carrier wavelength of the base station, the maximum transmission power that the base station can provide when transmitting continuous wave sensing signals, the gain of a transmitting antenna, the gain of a receiving antenna, the isolation between the transmitting and receiving antennas, the saturation power of the receiving antenna, the minimum radar cross section (RCS) of the sensing target, or the minimum detectable power of the continuous wave sensing signal.

The first distance that can be sensed using the continuous wave sensing signal can be calculated by: firstly the maximum transmission power $S_{max,c} = S_r + I$ of the transmitting antenna is calculated based on the saturation power $S_r$ of the receiving antenna and the isolation $I$ between the transmitting and receiving antennas, assuming that the receiving antenna is not saturated. Then, the smaller value of $P_{max,c}$ and $S_{max,c}$ is selected as the actual maximum transmission power $P_c$ when sending continuous wave sensing signals, that is $P_c = min(S_{max,c}, P_{max,c})$. After determining the actual maximum transmission power $P_c$, the first distance

$$L_c = \sqrt[4]{\frac{P_c G_{t,c} G_{r,c} \lambda^2 \sigma}{S_{min,c}(4\pi)^3}}$$ that can be sensed using the continuous wave sensing signal is calculated based on the carrier wavelength $\lambda$, the transmission antenna gain $G_{t,c}$, the receiving antenna gain $G_{r,c}$, the minimum RCS value $\sigma$ of the sensing target, and minimum detectable power $S_{min,c}$ of the sensing signal.

At Step 104: a target sensing distance range is determined on the basis of a sensing scenario.

At Step 106: on the basis of the magnitude relationship between the target distance and a boundary value of the target sensing distance range, a target sensing signal configured for the base station is determined.

In the embodiments of the present application, due to the limitation of antenna isolation, continuous wave sensing signals can only be transmitted with small power, and there will be bidirectional transmission loss and reflection loss in the sensing signal, which limits the sensing distance to a narrow range. By introducing pulse sensing signals, base stations can adopt a time-division transmission and reception mode for sensing. All antennas first send the pulse sensing signals, and after the transmission is completed, all antennas switch to the receiving state to receive the echoes. During this process, there is no need to consider the problem of antenna saturation, so that larger power transmission can be used to cover farther distances. However, this also leads to blind zones in the surrounding of the base station. Therefore, by calculating the target distance that can be sensed using the target sensing signal on the basis of the parameters of the base station, the target sensing signal including continuous wave sensing signals or pulse sensing signals; determining the target sensing distance range on the basis of the target sensing scenario; based on the above obtained target distance and the target sensing distance range, and on the basis of the magnitude relationship between the target distance and the boundary value of the target sensing distance range, determining the target sensing signal configured for the base station, the target sensing signals that can meet the coverage requirements of the sensing signals can be configured for the base station on the basis of different characteristics of continuous wave sensing signals and pulse sensing signals in terms of the sensing distance range, as well as the magnitude relationship between the target distance and the boundary values of the target sensing distance range; and the problem of incomplete sensing coverage distance in some cases where continuous wave sensing signals or pulse sensing signals are used alone can be solved.

In an implementation, the above boundary value of the target sensing distance range includes a minimum target sensing distance $d_{min}$ and a maximum target sensing distance $d_{max}$, wherein the minimum target sensing distance is the target sensing distance with the minimal value in the target sensing distance range, and the maximum target sensing distance is the target sensing distance with the maximal value in the target sensing distance range; so the above Step 106 may include that: in the case that the maximum target sensing distance does not exceed the first distance that can be sensed using the continuous wave sensing signal, it is determined to configure the continuous wave sensing signal for the base station.

In the embodiments of the present application, in the case that the target sensing distance range that needs to be sensed is close to the base station, and the maximum target sensing distance does not exceed the first distance that can be sensed using continuous wave sensing signals, that is, the first distance that can be sensed using continuous wave sensing signals can meet the target sensing distance range, only continuous wave sensing signals are configured for the base station, thereby satisfying the target sensing distance range, while reducing the resource cost of sensing signals.

In an implementation, in the case that the maximum target sensing distance exceeds the first distance and the minimum target sensing distance exceeds the first distance, it is determined to configure the pulse sensing signal for the base station.

In the embodiments of the present application, in the case that the target sensing distance range that needs to be sensed is far away from the base station, the maximum target sensing distance exceeds the first distance that can be sensed using the continuous wave sensing signal, and the minimum target sensing distance also exceeds the first distance that can be sensed using the continuous wave sensing signal, that is, the second distance that can be sensed using the pulse sensing signal can meet the target sensing distance range, only pulse sensing signals with a transmission power of $P_{max}$, $_p$ and a pulse width of $t = \dfrac{2d_{min}}{c} - \tau$, are configured for the base station, thereby satisfying the target sensing distance range, while reducing the resource cost of sensing signals.

In an implementation, in the case that the maximum target sensing distance exceeds the first distance and the minimum target sensing distance does not exceed the first distance, a pulse width allowed for the pulse sensing signal is calculated based on a blind zone range, wherein the blind zone range is from zero to the minimum target sensing distance; and a second distance that can be sensed using the pulse sensing signal is calculated based on the pulse width and parameters of the base station.

In the embodiments of the present application, in the case that the first distance that can be sensed by using only continuous wave sensing signals cannot cover the relatively long target sensing distance range, the second distance that can be sensed by using only pulse sensing signals has a blind zone, and using either of the two sensing signals alone cannot meet the requirements of the target sensing distance range, it is considered to configure both continuous wave sensing signal and pulse sensing signal for the base station simultaneously. That is, in the case that the maximum target sensing distance exceeds the first distance that can be sensed using the continuous wave sensing signal and the minimum target sensing distance does not exceed the first distance, firstly, the pulse width $t = \dfrac{2d_{min}}{c} - \tau$ allowed for the pulse sensing signal is calculated based on the blind zone range of the determined pulse sensing signal, and then based on the pulse width, the parameters of the base station, the sensing symbol length $T$, the gain $G_t$, $_p$ of the transmitting antenna, the gain $G_r$, $_p$ of receiving antenna, the minimum RCS value $\sigma$ of the sensing target, the minimum detectable power $S_{min}$, $_p$ of the pulse sensing signal, the second distance

$$L_p = \sqrt[4]{\dfrac{tP_{max,\,p}G_{t,\,p}G_{r,\,p}\lambda^2\sigma}{TS_{min,\,p}(4\pi)^3}}$$ that can be sensed using the pulse sensing signal alone when the pulse width is t is calculated.

Further, after calculating the second distance that can be sensed by the pulse sensing signal, on the basis of the magnitude relationship between the target distance and the boundary value of the target sensing distance range, determining the target sensing signal configured for the base station, may include that : on the basis of the magnitude relationship between the second distance and the boundary value of the target sensing distance range, it is determined to configure the pulse sensing signal for the base station, or configure both the continuous wave sensing signal and the pulse sensing signal for the base station.

After a preliminary judgment based on the first distance that can be sensed using continuous wave sensing signals, judgement is made again according to the second distance that can be sensed using pulse sensing signals. Thus, the sensing signal configured for the base station that can meet the requirements of the target sensing distance range can be determined accurately based on the magnitude relationship between the first distance, the second distance and the boundary values of the target sensing distance range.

In an implementation, on the basis of the magnitude relationship between the second distance and the boundary value of the target sensing distance range, determining to configure the pulse sensing signal for the base station, may include the following steps.

(1) In the case that the maximum target sensing distance does not exceed the second distance, it is determined to configure the pulse sensing signal for the base station.

In this case, the pulse sensing signal can meet the requirements of the target sensing distance range, so the base station is configured with a pulse sensing signal with a transmission power of $P_{\max , p}$ and a pulse width of $t = \dfrac{2d_{min}}{c} - \tau$.

(2) In the case that the maximum target sensing distance exceeds the second distance, it is determined to configure both the continuous wave sensing signal and the pulse sensing signal for the base station.

In this case, the pulse sensing signal cannot meet the requirements of the target sensing distance range, and continuous wave sensing signals need to be configured to cover the blind zone of the pulse sensing signal, so the base station is configured with both a continuous wave sensing signal with a transmission power of $P_c$ and a pulse sensing signal with a transmission power of $P_{\max , p}$ and a pulse width of

$$t = \frac{2L_c}{c} - \tau$$.

In an implementation, prior to calculating the target distance that can be sensed using the target sensing signal on the basis of parameters of the base station in the above Step 102, the above sensing signal configuration method may further include that: in the case that the base station only supports using the continuous wave sensing signal, the base station is upgraded, wherein the upgraded base station supports using both the continuous wave sensing signal and the pulse sensing signal.

Optionally, in the case that the base station supports using both continuous wave sensing signal and pulse sensing signal, the above sensing signal configuration method can be directly executed to configure the sensing signal.

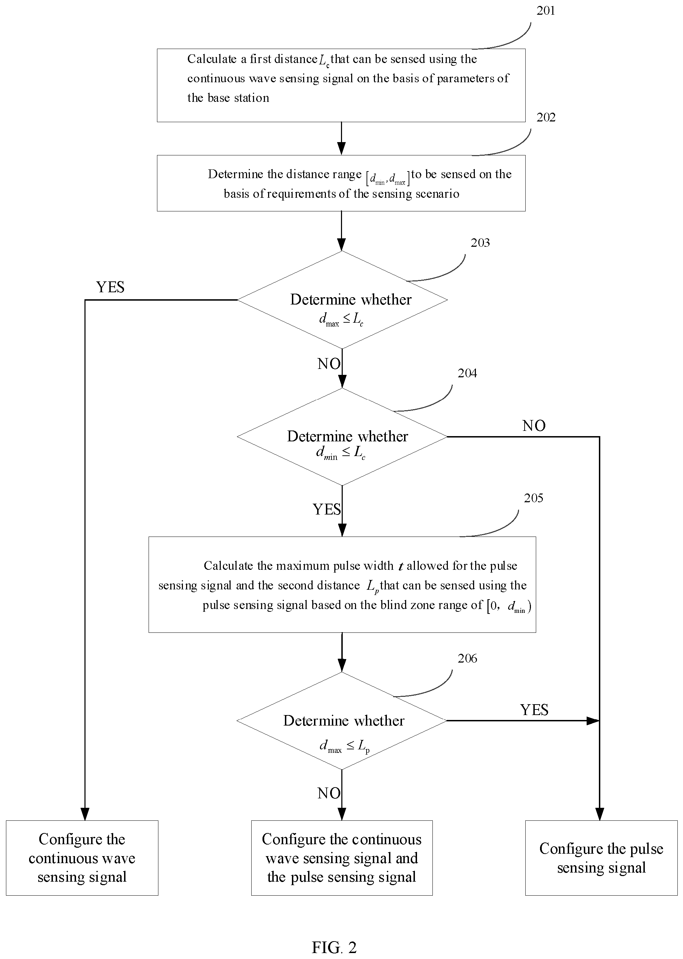

Fig. 2 shows a flowchart of another sensing signal configuration method provided by an exemplary embodiment of the present application. Referring to Fig. 2, the method includes the following steps.

At Step 201: on the basis of parameters of the base station, a first distance $L_c$ that can be sensed using the continuous wave sensing signal is calculated.

In some cases, based on the carrier wavelength $\lambda$ of the base station, the maximum transmission power $P_{\max , c}$ that the base station can provide when transmitting continuous waves, the gain $G_{t , c}$ of the transmitting antenna, the gain $G_{r , c}$ of the receiving antenna, the isolation $I$ between the transmitting and receiving antennas, the saturation power $S_r$ of the receiving antenna, the minimum RCS value $\sigma$ of the sensing target, and the minimum detectable power $S_{min , c}$ of the continuous wave sensing signal, the first distance

$$L_c = \sqrt[4]{\frac{P_c G_{t , c} G_{r , c} \lambda^2 \sigma}{S_{min , c} (4\pi)^3}}$$ that can be sensed using the continuous wave sensing signal is calculated.

At Step 202: the distance range $[d_{max}, d_{min}]$ to be sensed is determined on the basis of requirements of the sensing scenario.

$d_{min}$ represents the minimum distance that needs to be sensed, and $d_{max}$ represents the maximum distance that needs to be sensed.

At Step 203: whether $d_{max} \leq L_c$ is determined. $d_{max}$ is compared with $L_c$, if $d_{max} \leq L_c$, the base station is configured with only the continuous wave sensing signal with a transmission power of $P_c$, and the sensing signal configuration process ends; Otherwise, proceed to Step 204.

At Step 204: whether $d_{min} \leq L_c$ is determined. $d_{min}$ is compared with $L_c$, if $d_{min} \leq L_c$, proceed to step 205; Otherwise, the base station is configured with only pulse sensing signals with a transmission power of $P_{\max , p}$ and a pulse width of $t = \dfrac{2d_{min}}{c} - \tau$, and the sensing signal configuration process ends. Wherein $c$ represents the speed of light, $\tau$ represents the delay of antenna transmission and reception state switching, and $P_{\max , p}$ represents the maximum transmission power that the base station can provide when sending pulses.

At Step 205: the maximum pulse width t allowed for the pulse sensing signal and the second distance $L_p$ that can be sensed by the pulse sensing signal are calculated based on the blind zone range of $[0 , d_{min})$. Firstly, based on the blind zone range $[0 , d_{min})$, the maximum pulse width $t = \dfrac{2d_{min}}{c} - \tau$ allowed for the pulse sensing signal is calculated. On such basis, according to the sensing symbol length $T$, the transmitting antenna gain $G_{t , p}$ of the receiving antenna, the gain $G_{r , p}$ of the receiving antenna, the minimum RCS value $\sigma$ of the sensing target, and the minimum detectable power $S_{min , p}$ of the pulse sensing signal, the second distance

$$L_p = \sqrt[4]{\frac{t P_{\max , p} G_{t , p} G_{r , p} \lambda^2 \sigma}{T S_{min , p} (4\pi)^3}}$$ that can be sensed by the pulse signal alone when the pulse width is $t$ is calculated.

At Step 206: whether $d_{max} \leq L_p$ is determined. $d_{max}$ is compared with $L_p$, if $d_{max} \leq L_p$, the base station is configured with only the pulse sensing signal with a transmission power of $P_{\max , p}$ and a pulse width of

$$t = \frac{2d_{min}}{c} - \tau$$ for; Otherwise, the base station will be configured with both continuous wave and pulse sensing signals for time-division transmission, wherein the transmission power of the continuous wave sensing signal is $P_c$, the transmission power of the pulse sensing signal is $P_{\max,p}$, and the pulse width is $t = \dfrac{2L_c}{c} - \tau$.

In the embodiments of the present application, the first distance $L_c$ that can be sensed using the continuous wave sensing signal is firstly calculated by means of the parameters of the base station. After determining the distance range [$d_{min}$, $d_{max}$] that needs to be sensed according to the requirements of the sensing scenario, $d_{max}$ is compared with $L_c$. If $d_{max} \le L_c$, that is only the continuous wave sensing signal can be used to meet the distance range that needs to be sensed, therefore, only the continuous wave sensing signal with a transmission power of $P_c$ is configured for the base station. If $d_{max} > L_c$, it is necessary to further compare the $d_{min}$ with $L_c$, If $d_{min} > L_c$, that is only pulse sensing signals can be used to meet the distance range that needs to be sensed, therefore, only pulse sensing signals with a transmission power of $P_{\max,p}$ and a pulse width of $t = \dfrac{2d_{min}}{c} - \tau$ are configured for the base station. If $d_{min} \le L_c$, there is a blind zone in the pulse sensing signal used at this time. According to the blind zone range of [0, $d_{min}$), the maximum pulse width t allowed for the pulse sensing signal can be calculated, as well as the second distance $L_p$ that can be sensed by the pulse sensing signal can be calculated. Then, $d_{max}$ is compared with $L_p$. If $d_{max} \le L_p$, the base station is configured with only the pulse sensing signal with a transmission power of $P_{\max,p}$ and a pulse width of $t = \dfrac{2d_{min}}{c} - \tau$. If $d_{max} > L_p$, the base station is configured with a continuous wave sensing signal with a transmission power of P_c and a pulse sensing signal with a transmission power of $P_{\max,p}$ and a pulse width of $t = \dfrac{2L_c}{c} - \tau$. When only using continuous wave sensing signals or pulse sensing signals can meet the requirement for sensing coverage, only configuring continuous wave sensing signals or pulse sensing signals separately for the base station to reduce the resource cost. When using continuous wave or pulse signals only cannot meet the requirement for sensing coverage, the base station is configured with both continuous wave sensing signals and pulse sensing signals simultaneously to meet the sensing coverage requirements, thereby achieving flexible configuration of target sensing signals that can meet the sensing signal coverage requirements for the base station.

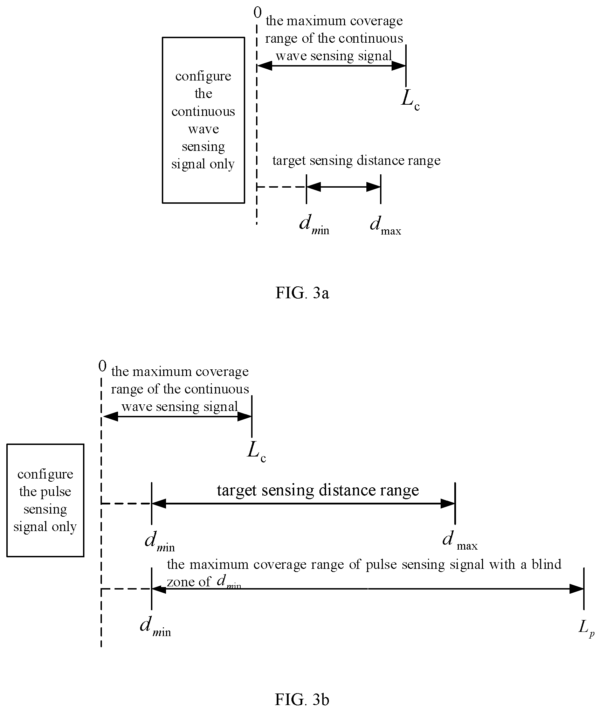

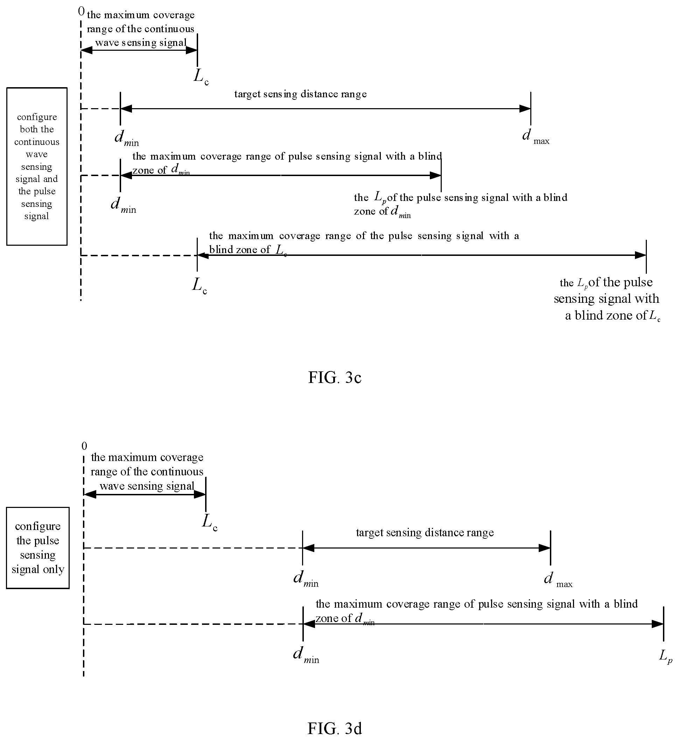

Fig. 3a, Fig. 3b, Fig. 3c and Fig. 3d illustrate the schematic diagrams of the configuration of sensing signals in different scenarios provided by exemplary embodiments of the present application, respectively.

Referring to Fig. 3a, in this scenario, the target sensing distance range is relatively close to the base station. For example, if a user enters the surrounding of the base station, the maximum value of the target sensing distance range is less than the maximum coverage range of the continuous wave sensing signal. Therefore, the base station is only configured with continuous wave sensing signal.

Referring to Fig. 3b, in this scenario, the target sensing distance range is at the medium-near point, for example, there is a distance between the vehicle and the base station. The pulse sensing signal designed based on the minimum value of the target sensing distance range can meet the requirements of the target sensing distance range, so the base station is only configured with pulse sensing signal.

Referring to Fig. 3c, in this scenario, the target sensing distance range includes three areas: far, medium, and near, such as a communication cell. The pulse sensing signal designed based on the minimum value of the target sensing distance range cannot meet the requirements of the target sensing distance range. Therefore, the base station is configured with both continuous wave sensing signal and pulse sensing signal simultaneously.

Referring to Fig. 3d, in this scenario, the target sensing distance range is far from the base station, for example, when an unmanned aerial vehicle intrudes, the minimum value of the target sensing distance range also exceeds the coverage range of the continuous wave sensing signal. The continuous wave sensing signal cannot provide assistance, so only pulse sensing signals are configured for the base station.

The present application also provides an exemplary embodiment, in which the parameters of the base station are: the carrier wavelength of the base station is λ=0.06m, the maximum transmission power that the base station can provide when transmitting continuous waves is $P_{\max,c}$ = 50dBm, the gain of the transmitting antenna is $G_{t,c}$ = 15 dB, the gain of the receiving antenna is $G_{r,c}$ = 15dB, the isolation between the transmitting and receiving antennas is $I$ = 65dB, the saturation power of the receiving antenna is $S_r$ = -45dB, the minimum RCS value of the sensing target is $\sigma$ = 1, the minimum detectable power of the continuous wave sensing signal is $S_{min,c}$ = -90dBm, the switching delay of the antenna transmitting-receiving state is $\tau$ = 80ns, the sensing symbol length is $T$ = 33us, the maximum transmission power that the base station can provide when sending pulse is $P_{\max,p}$ = 53dBm, the gain of the transmitting antenna is $G_{t,p}$ = 18dB, the gain of the receiving antenna is $G_{r,p}$ = 18dB, and the minimum detectable power of the pulse sensing signal is $S_{min,p}$ = -90dBm. The target sensing distance range required for setting the target sensing scenario is 30m-300m. For this scenario, the sensing signal configuration method can include the following steps.

Step 1: on the basis of parameters of the base station, the farthest distance $L_c$ that can be sensed using continuous wave sensing signal is calculated.

Firstly, on the premise that the receiving antenna is not saturated, the maximum transmission power of the transmitting antenna is calculated by $S_{\max,c} = S_r + I = 20$ dBm, .

Then, the smaller value among $P_{\max,c}$ and $S_{\max,c}$ is selected as the actual maximum transmission power when sending continuous wave sensing signals, i.e. $P_c = min(S_{\max,c}, P_{\max,c}) = min(20dBm, 50dBm) = 20dBm$.

After determining the actual maximum transmission power $P_c$, on the basis of the carrier wavelength $\lambda$, the gain $G_{t,c}$ of the transmission antenna, the gain $G_{r,c}$ of the reception antenna, the minimum RCS value $\sigma$ of the sensing target, and the minimum detectable power $S_{\min,c}$ of the sensing signal, the farthest distance that can be sensed using continuous wave sensing signal is calculated by $L_c = \sqrt[4]{\dfrac{P_c G_{t,c} G_{r,c} \lambda^2 \sigma}{S_{\min,c} (4\pi)^3}} = 116.06m$ .

Step 2: the target sensing distance range is determined as [30m, 300m] based on the requirements of the target sensing scenario.

Step 3: $d_{max}$ is compared with $L_c$, and it is found that $d_{max} = 300m > L_c = 116.06m$, indicating that only using continuous wave sensing signals cannot achieve coverage of the target sensing scenario area. Therefore, continue to execute Step 4.

Step 4: $d_{min}$ is compared with $L_c$, and it is found that $d_{min} = 30m < L_c = 116.06m$, therefore, continue to execute Step 5.

Step 5: the maximum pulse width

$t = \dfrac{2d_{min}}{cns} - \tau = 120\text{ns}$ allowed for the sensing pulse is calculated according to the blind zone range of $[0, d_{min})$. Further the maximum distance,

$L_p = \sqrt[4]{\dfrac{t P_{\max,p} G_{t,p} G_{r,p} \lambda^2 \sigma}{T S_{\min,p} (4\pi)^3}} = 269.05\text{m}$ , that can be covered by only using the pulse signal when the pulse width is 120ns is calculated.

Step 6: $d_{max}$ is compared with $L_p$, and it is found that $d_{max} = 300m > L_p = 269.05m$, therefore, the base station is configured with both continuous wave sensing signals and pulse sensing signals for time-division transmission, wherein the transmission power of the continuous wave sensing signal is $P_c = 20dBm$, the transmission power of the pulse sensing signal is $P_{\max,p} = 53dBm$, and the pulse width is configured to

$t = \dfrac{2L_c}{c} - \tau = 693.73\text{ns}$ . At this pulse width, the maximum range that the pulse sensing signal can cover is $L_p = \sqrt[4]{\dfrac{t P_{\max,p} G_{t,p} G_{r,p} \lambda^2 \sigma}{T S_{\min,p} (4\pi)^3}} = 417.19\text{m}$ . At this

point, the range that continuous wave sensing signals can cover is $[0m, 116.06m]$, and the range that pulse sensing signals can cover is [116.06m , 417.19m]. By combining the two, it can fully meet the coverage requirements of a distance of 30m-300m from the base station.

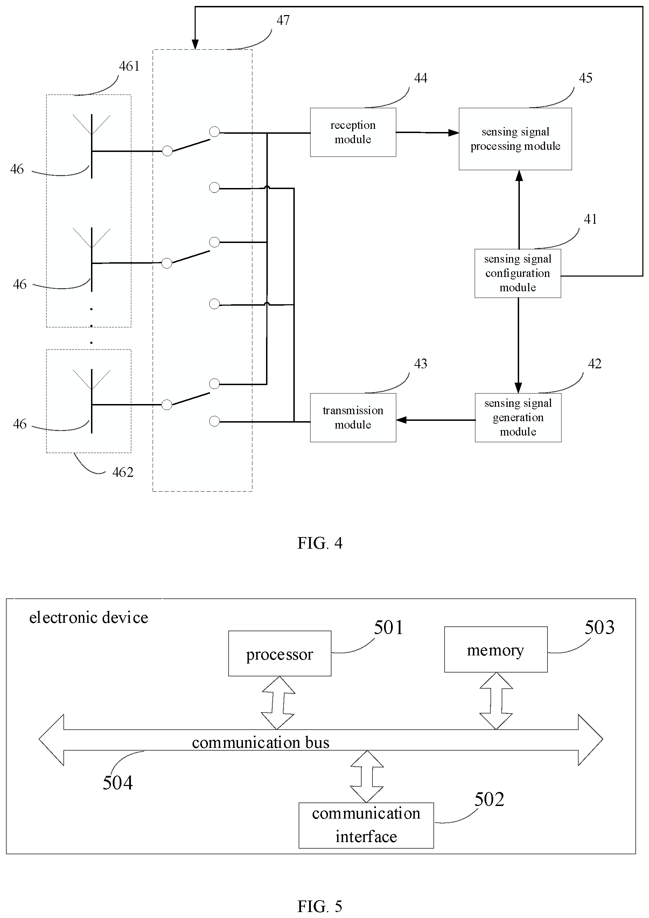

Fig. 4 shows a schematic diagram of the structure of a sensing signal configuration system provided by an exemplary embodiment of the present application. Referring to Fig. 4, the system includes a sensing signal configuration module 41, a sensing signal generation module 42 and a transmission module 43.

The sensing signal configuration module 41 is used to calculate a target distance that can be sensed using a target sensing signal on the basis of parameters of a base station, wherein the target sensing signal includes a continuous wave sensing signal or a pulse sensing signal; determine a target sensing distance range on the basis of a sensing scenario; and determine a target sensing signal configured for the base station on the basis of the magnitude relationship between the target distance and a boundary value of the target sensing distance range. The sensing signal generation module 42 is used to generate the corresponding target sensing signals based on the target sensing signals configured by the sensing signal configuration module for the base station. The transmission module 43 is used to send the target sensing signal generated by the sensing signal generation module.

In an implementation, the above system may further include a reception module 44 and a sensing signal processing module 45.

The reception module is used to receive radio frequency echo signals and to convert the radio frequency echo signals into baseband signals; the sensing signal processing module is used to process the baseband signal based on the target sensing signal configured by the sensing signal configuration module for the base station.

In an implementation, the above system may further include antennas 46 and an antenna transmitting-receiving switch 47.

In the case that the target sensing signal configured by the sensing signal configuration module 41 for the base station is a continuous wave sensing signal, the antenna transmitting-receiving switch 47 is used to connect a first part of the antennas 461 to the reception module 44, and the first part of the antennas 461 is used to send the received radio frequency echo signal to the reception module 44; the antenna transmitting-receiving switch 47 is also used to connect a second part of the antennas 462 to the transmission module 43, and the second part of the antennas 462 is used to send the target sensing signal received from the transmission module 43. Or, in the case that the target sensing signal configured by the sensing signal configuration module 41 for the base station is a pulse sensing signal, the antenna transmitting-receiving switch 47 is used to connect the antennas 46 to the transmission module 43 during the pulse duration of the pulse sensing signal, and the antennas 46 are used to send the target sensing signal received from the transmission module 43; the antenna transmitting-receiving switch 47 is also used to connect the antennas 46 to the reception module 44 when the pulse duration of the pulse sensing signal ends, and the antennas 46 are used to receive the radio frequency echo signal.

The system can implement the various steps of the sensing signal configuration method mentioned above, and the specific explanation will not be repeated here.

In an exemplary embodiment, an electronic device is also provided for executing the sensing signal configuration method described above. Fig. 5 is a schematic diagram of the structure of an electronic device implementing various embodiments of the present application. Electronic devices can vary greatly due to differences in configuration or performance, including processor 501, communication interface 502, memory 503, and communication bus 504. Among them, processor 501, communication interface 502, and memory 503 communicate with each other through communication bus 504. The processor 501 can call computer programs stored in the memory 503 and run on the processor 501 to execute all or part of the steps of the sensing signal configuration method described above, and achieve the same technical effect. To avoid repetition, it will not be repeated here.

The above electronic device structure does not constitute a limitation on electronic devices. Electronic devices can include more or fewer components than shown in the diagram, or combine certain components, or arrange different components. For example, input units can include Graphics Processing Unit (GPU) and microphones, and display units can be configured in the form of liquid crystal displays, organic light-emitting diodes, etc. to display panels. The user input unit includes at least one of a touch panel and other input devices. Touch panel is also known as touch screen. Other input devices may include but are not limited to physical keyboards, function keys (such as volume control buttons, switch buttons, etc.), trackballs, mice, and joysticks, which will not be elaborated here.

The memory can be used to store software programs and various data. The memory may mainly include a first storage area for storing programs or instructions and a second storage area for storing data, wherein the first storage area may store an operating system, at least one application program or instruction required for a function (such as sound playback function, image playback function, etc.), etc. In addition, the memory may include volatile memory or non-volatile memory, or the memory may include both volatile and non-volatile memory. Among them, non-volatile memory can be Read-only memory (ROM), Programmable ROM (PROM), Erasable PROM (EPROM), Electrically EPROM (EEPROM), or flash memory. Volatile memory can be Random Access Memory (RAM), Static RAM (SRAM), Dynamic RAM (DRAM), Synchronous DRAM (SDRAM), Double Data Rate SDRAM (DDRSDRAM), Enhanced SDRAM (ESDRAM), Synch link DRAM (SLDRAM), and Direct Rambus RAM (DRRAM).

The processor may include one or more processing units; optionally, the processor integrates an application processor and a modulation and demodulation processor. The application processor mainly processes operations related to the operating system, user interface, and application programs, while the modulation and demodulation processor mainly processes wireless communication signals, such as baseband processors. It can be understood that the above modulation and demodulation processors may not be integrated into the processor.

In an exemplary embodiment, a computer-readable storage medium is also provided, which stores at least one computer program loaded and executed by a processor to implement all or part of the steps in the sensing signal configuration method described above. For example, the readable storage medium can be Read-Only Memory (ROM), Random Access Memory (RAM), Compact Disc Read-Only Memory (CD-ROM), magnetic tape, floppy disk, and optical data storage devices.

Those skilled in the art will easily come up with other embodiments of the present application after considering the specification and practicing the invention disclosed herein. The present application is intended to cover any variations, uses, or adaptive changes of the present application, which follow the general principles of the present application and include common knowledge or customary technical means in the art not disclosed in the present application. The specification and embodiments are only considered exemplary, and the true scope and spirit of the present application are indicated by the claims.

It should be understood that the present application is not limited to the precise structure described above and shown in the accompanying drawings, and various modifications and changes can be made without departing from its scope. The scope of the present application is limited only by the appended claims.

**Claims**

1. A sensing signal configuration method, comprising:

   calculating, on the basis of parameters of a base station, a target distance that can be sensed using a target sensing signal, wherein the target sensing signal comprises a continuous wave sensing signal or a pulse sensing signal; determining a target sensing distance range on the basis of a sensing scenario; and determining, on the basis of a magnitude relationship between the target distance and a boundary value of the target sensing distance range, a target sensing signal configured for the base station.

2. The method according to claim 1, wherein the boundary value of the target sensing distance range comprises a minimum target sensing distance and a maximum target sensing distance, wherein the minimum target sensing distance is a target sensing distance with a minimal value in the target sensing distance range, and the maximum target sensing distance is a target sensing distance with a maximal value in the target sensing distance range;

determining, on the basis of the magnitude relationship between the target distance and the boundary value of the target sensing distance range, the target sensing signal configured for the base station, comprising:
determining, in the case that the maximum target sensing distance does not exceed a first distance that can be sensed using the continuous wave sensing signal, to configure the continuous wave sensing signal for the base station.

3. The method according to claim 2, wherein determining, on the basis of the magnitude relationship between the target distance and the boundary value of the target sensing distance range, the target sensing signal configured for the base station, comprising:
determining, in the case that the maximum target sensing distance exceeds the first distance and the minimum target sensing distance exceeds the first distance, to configure the pulse sensing signal for the base station.

4. The method according to claim 2, wherein determining, on the basis of the magnitude relationship between the target distance and the boundary value of the target sensing distance range, the target sensing signal configured for the base station, comprising:

calculating, in the case that the maximum target sensing distance exceeds the first distance and the minimum target sensing distance does not exceed the first distance, a pulse width allowed for the pulse sensing signal based on a blind zone range, wherein the blind zone range is from zero to the minimum target sensing distance; and
calculating, on the basis of the pulse width and the parameters of the base station, a second distance that can be sensed using the pulse sensing signal.

5. The method according to claim 4, wherein determining, on the basis of the magnitude relationship between the target distance and the boundary value of the target sensing distance range, the target sensing signal configured for the base station, comprising:
determining, on the basis of a magnitude relationship between the second distance and the boundary value of the target sensing distance range, to configure the pulse sensing signal for the base station or configure both the continuous wave sensing signal and the pulse sensing signal for the base station.

6. The method according to claim 5, wherein determining, on the basis of the magnitude relationship between the second distance and the boundary value of the target sensing distance range, the target sensing signal configured for the base station, comprising:

determining, in the case that the maximum target sensing distance does not exceed the second distance, to configure the pulse sensing signal for the base station; or
determining, in the case that the maximum target sensing distance exceeds the second distance, to configure both the continuous wave sensing signal and the pulse sensing signal for the base station.

7. The method according to claim 1, wherein prior to calculating, on the basis of parameters of the base station, the target distance that can be sensed using the target sensing signal, the method further comprising:
upgrading the base station in the case that the base station only supports suing the continuous wave sensing signal, wherein an upgraded base station supports using both the continuous wave sensing signal and the pulse sensing signal.

8. A sensing signal configuration system, comprising: a sensing signal configuration module, a sensing signal generation module and a transmission module;

wherein the sensing signal configuration module is used to calculate a target distance that can be sensed using a target sensing signal on the basis of parameters of a base station, wherein the target sensing signal comprises a continuous wave sensing signal or a pulse sensing signal; determine a target sensing distance range on the basis of a sensing scenario; and determine a target sensing signal configured for the base station on the basis of a magnitude relationship between the target distance and a boundary value of the target sensing distance range;
the sensing signal generation module is used to generate the corresponding target sensing signal based on the target sensing signal configured by the sensing signal configuration module for the base station; and
the transmission module is used to send the target sensing signal generated by the sensing signal generation module.

9. The system according to claim 8, wherein the system further comprising: a reception module and a sensing signal processing module;

> wherein the reception module is used to receive a radio frequency echo signal and convert the radio frequency echo signal into a baseband signal; and
> the sensing signal processing module is used to process the baseband signal based on the target sensing signal configured by the sensing signal configuration module for the base station.

10. The system according to claim 9, wherein the system further comprising: an antennas, and an antenna transmitting-receiving switch; wherein
in the case that the target sensing signal configured by the sensing signal configuration module for the base station is a continuous wave sensing signal, the antenna transmitting-receiving switch is used to connect a first part of the antennas to the reception module, and the first part of the antennas is used to send a received radio frequency echo signal to the reception module; and the antenna transmitting-receiving switch is also used to connect a second part of the antennas to the transmission module, and the second part of the antennas is used to send the target sensing signal received from the transmission module (43); or in the case that the target sensing signal configured by the sensing signal configuration module for the base station is a pulse sensing signal, the antenna transmitting-receiving switch is used to connect the antennas to the transmission module during a pulse duration of the pulse sensing signal, and the antennas are used to send the target sensing signal received from the transmission module ; and the antenna transmitting-receiving switch is also used to connect the antennas to the reception module when the pulse duration of the pulse sensing signal ends, and the antennas are used to receive the radio frequency echo signal.

11. An electronic device comprising a processor and a memory, the memory storing programs or instructions executable on the processor, which when executed by the processor, implements the steps of the sensing signal configuration method according to any one of claims 1 to 7.

12. A computer-readable storage medium storing at least one computer program, which when loaded and executed by a processor, implements the steps of the sensing signal configuration method according to any one of claims 1 to 7.

102

Calculate a target distance that can be sensed using a target sensing signal on the basis of parameters of a base station

104

Determine a target sensing distance range on the basis of a target sensing scenario

106

Determine a target sensing signal configured for the base station on the basis of the magnitude relationship between the target distance and a boundary value of the target sensing distance range

FIG. 1

201

Calculate a first distance $L_c$ that can be sensed using the continuous wave sensing signal on the basis of parameters of the base station

202

Determine the distance range $[d_{min}, d_{max}]$ to be sensed on the basis of requirements of the sensing scenario

203

Determine whether $d_{max} \leq L_c$

YES

NO

204

Determine whether $d_{min} \leq L_c$

NO

YES

205

Calculate the maximum pulse width $t$ allowed for the pulse sensing signal and the second distance $L_p$ that can be sensed using the pulse sensing signal based on the blind zone range of $[0, d_{min})$

206

Determine whether $d_{max} \leq L_p$

YES

NO

Configure the continuous wave sensing signal

Configure the continuous wave sensing signal and the pulse sensing signal

Configure the pulse sensing signal

FIG. 2

0 the maximum coverage
range of the continuous
wave sensing signal

configure
the
continuous
wave
sensing
signal only

$L_\mathrm{c}$

target sensing distance range

$d_{min}$     $d_\mathrm{max}$

FIG. 3a

0 the maximum coverage
range of the continuous
wave sensing signal

$L_\mathrm{c}$

configure
the pulse
sensing
signal only

target sensing distance range

$d_{min}$             $d_\mathrm{max}$

the maximum coverage range of pulse sensing signal with a blind
zone of $d_{min}$

$d_{min}$                           $L_p$

FIG. 3b

0 the maximum coverage range of the continuous wave sensing signal

$L_c$

target sensing distance range

configure both the continuous wave sensing signal and the pulse sensing signal

$d_{min}$

$d_{max}$

the maximum coverage range of pulse sensing signal with a blind zone of $d_{min}$

the $L_p$ of the pulse sensing signal with a blind zone of $d_{min}$

$d_{min}$

the maximum coverage range of the pulse sensing signal with a blind zone of $L_c$

$L_c$

the $L_p$ of the pulse sensing signal with a blind zone of $L_c$

FIG. 3c

0 the maximum coverage range of the continuous wave sensing signal

$L_c$

configure the pulse sensing signal only

target sensing distance range

$d_{min}$

$d_{max}$

the maximum coverage range of pulse sensing signal with a blind zone of $d_{min}$

$d_{min}$

$L_p$

FIG. 3d

FIG. 4

FIG. 5

## INTERNATIONAL SEARCH REPORT

| International application No. |
| --- |
| **PCT/CN2024/112990** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP: 通感一体, 感知, 信号, 距离, 范围, 连续波, 脉冲; ISAC, sense, signal, distance, range, continuous wave, pulse

**C. DOCUMENTS CONSIDERED TO BE RELEVANT**

| Category* | Citation of document, with indication, where appropriate, of the relevant passages | Relevant to claim No. |
| --- | --- | --- |
| A | CN 115442756 A (VIVO COMMUNICATION TECHNOLOGY CO., LTD.) 06 December 2022 (2022-12-06) entire document | 1-12 |
| A | CN 116170092 A (WEIWO SOFTWARE TECHNOLOGY CO., LTD.) 26 May 2023 (2023-05-26) entire document | 1-12 |
| A | CN 116076102 A (BEIJING XIAOMI MOBILE SOFTWARE CO., LTD.) 05 May 2023 (2023-05-05) entire document | 1-12 |
| A | CN 116489785 A (CHINA TELECOM CORP., LTD.) 25 July 2023 (2023-07-25) entire document | 1-12 |
| A | WO 2022148195 A1 (DATANG MOBILE COMMUNICATIONS EQUIPMENT CO., LTD.) 14 July 2022 (2022-07-14) entire document | 1-12 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **30 September 2024** | **12 October 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/112990**

| Patent document cited in search report | | | Publication date (day/month/year) | Patent family member(s) | | | Publication date (day/month/year) |
|---|---|---|---|---|---|---|---|
| CN | 115442756 | A | 06 December 2022 | None | | | |
| CN | 116170092 | A | 26 May 2023 | None | | | |
| CN | 116076102 | A | 05 May 2023 | None | | | |
| CN | 116489785 | A | 25 July 2023 | None | | | |
| WO | 2022148195 | A1 | 14 July 2022 | EP | 4277381 | A1 | 15 November 2023 |
| | | | | EP | 4277381 | A4 | 03 July 2024 |
| | | | | US | 2024064718 | A1 | 22 February 2024 |

Form PCT/ISA/210 (patent family annex) (July 2022)

**EP 4 773 654 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311171203